# EUROPÄISCHE PATENTSCHRIFT

(11) **EP 0 432 587 B1**
(45) Veröffentlichungstag und Bekanntmachung des Hinweises auf die Patenterteilung: **27.07.1994**
(21) Anmeldenummer: 90122919.5
(22) Anmeldetag: 30.11.1990
(51) Int. Cl.: B60L 1/10

(54) **Energieversorgungseinrichtung für das Bordrestaurant eines Speisewagens**
Power source device for the restaurant of a dining car
Source d'alimentation pour le restaurant d'une voiture-restaurant

(30) Priorität: 12.12.1989 DE 3940912
(43) Veröffentlichungstag der Anmeldung: 19.06.1991
(73) Patentinhaber: Krupp Verkehrstechnik GmbH, 24159 Kiel (DE)
(72) Erfinder: Seeger, Herbert, W-4320 Hattingen (DE)
(74) Vertreter: Hansmann, Dierk, Dipl.-Ing.

(56) Entgegenhaltungen:
- DE-A- 3 832 442
- ELEKTRISCHE BAHNEN, Bd. 77, Nr. 6, Juni 1979, München DE, Seiten 173-175; M. KRENZ: 'UNTERBRECHUNGSFREIE ENERGIEVERSORGUNGSANLAGEN FÜR DAS INTEGRIERTE TRANSPORTSTEUERSYSTEM DER DEUTSCHEN BUNDESBAHN'
- NEUE BAHN Nr. 3, März 1988, DE, Seiten 26-37; A. KRIECHL ET AL: 'DIE NEUEN SPEISEWAGEN DER öBB'

## Beschreibung

Die Erfindung betrifft eine Energieversorgungseinrichtung für das Bordrestaurant eines Speisewagens, mit einer an eine Zugsammelschiene anschließbaren, eine Ein-Phasen-Wechselspannung liefernden Umformungseinheit, der über einen Thyristorsteller oder Chopper und einen Drehstromwechselrichter Küchen-Nutzverbraucher und über ein Ladegerät eine Bordbatterie nachgeschaltet sind, welche bei Ausfall der Sammelschienen-Spannung als Notenergieversorgung zumindest einen Teil der Küchen-Nutzverbraucher speist.

Für die Zubereitung von Speisen in Bordrestaurants ist eine Kücheneinrichtung mit elektrisch betriebenen Küchen-Nutzverbrauchern vorgesehen; diese werden von einer bordeigenen Energieversorgungseinrichtung entweder mit Drehstromspannung oder Ein-Phasen-Wechselspannung versorgt.

Bei neueren Energieversorgungseinrichtungen der eingangs erwähnten Gattung wird die Energie für die Küchen-Nutzverbraucher im Normalbetrieb unmittelbar - das heißt ohne Zwischenschaltung der Bordbatterie - von der Zugsammelschiene über eine Umformungseinheit, einen Thyristorsteller oder Chopper und einen nachgeschalteten Drehstromwechselrichter eingespeist. Um zumindest einen Teil der Küchen-Nutzverbraucher auch bei Ausfall der Sammelschienen-Spannung mit Energie versorgen zu können, ist die als Notenergieversorgung dienende Bordbatterie mit einem Zusatzwechselrichter ausgestattet, an den die betreffenden Küchen-Nutzverbraucher anschließbar sind (vgl. Zeitschrift "Neue Bahn", 3/88, S. 26 bis 37).

Die durch den Reisezug hindurchgehende Zugsammelschiene steht normalerweise über den Stromabnehmer der Lokomotive mit der jeweiligen Fahrleitung in Verbindung und führt in Europa 3000 V bzw. 1500 V Gleichspannung oder 1500 V Wechselspannung bei 50 Hz bzw. 1000 V Wechselspannung bei 16 2/3 Hz. Die Energieeinspeisung erfolgt bei Wechselspannung unmittelbar über einen Transformator und bei Gleichspannung über einen Wechselrichter nebst Transformator; das dazu erforderliche elektrische Bauelement ist als Umformungseinheit bezeichnet.

Aus dem Aufsatz von Krenz "Unterbrechungsfreie Energieversorgungsanlagen für das Integrierte Transportsteuersystem der Deutschen Bundesbahn", "Elektrische Bahnen" 77 (1979), Heft 6, S. 173 ff, ist es bekannt, eine Notstromversorgung mit Hilfe einer Batterie durchzuführen. Es handelt sich um eine stationäre Anlage, bei der für einen Netzausfall gewährleistet werden soll, daß angeschlossene Datenverarbeitungsanlagen betriebsbereit bleiben. Es ist dabei für die Speisung der Batterie sowie für die Normalspeisung der angeschlossenen Geräte ein gemeinsames Gleichrichtergerät vorgesehen. Spezielle Maßnahmen, um bei einer Abweichung der Batteriespannung von der üblichen Gleichspannungsversorgung eine Anpassung vorzunehmen, sind jedoch nicht beschrieben.

Aus der DE 38 32 442 A1 ist eine weitere Vorrichtung zum Betreiben elektrischer Verbraucher eines Reisezugwagens bekannt. Über die Zugsammelschiene und einen gemeinsamen Gleichrichter sowie Thyristorsteller sind mehrere Wechselrichter angeschlossen, die zur Speisung unterschiedlicher Verbraucher dienen. Der Anschluß der Verbraucher erfolgt über nachgeschaltete Transformatoren. Die Vorrichtung kann auch zur Versorgung von Kühlaggregaten eingesetzt werden, es wird jedoch nur der Normalbetrieb abgedeckt, eine Notstromversorgung ist nicht vorgesehen.

Der Erfindung liegt die Aufgabe zugrunde, eine Energieversorgungseinrichtung für das Bordrestaurant eines Speisewagens der eingangs erwähnten Gattung zu entwickeln, die bei vermindertem technischen Aufwand bei Ausfall der Sammelschienen-Spannung die Notversorgung zumindest eines Teils der Küchen-Nutzverbraucher sicherstellt.

Die Energieversorgungseinrichtung soll dabei insbesondere derart beschaffen sein, daß die Küchen-Kühlaggregate, das heißt die Kühlaggregate für Kühlschränke und/oder für die Getränkezapfanlage, im Notfall von der Bordbatterie mit Energie versorgt werden können.

Die gestellte Aufgabe wird durch eine Energieversorgungseinrichtung mit den Merkmalen des Patentanspruchs 1 gelöst. Der der Erfindung Zugrundeliegende Lösungsgedanke besteht danach darin, die Bordbatterie zusätzlich schaltungstechnisch in der Weise mit dem Drehstromwechselrichter für die Küchen-Nutzverbraucher zu verknüpfen, daß sie diesen als Notenergieversorgung unmittelbar - also unter Fortfall eines Zusatzwechselrichters - mit Energie beaufschlagen kann.

Der Erfindungsgegenstand ist dadurch weiter ausgestaltet, daß die Küchen-Nutzverbraucher unter Zwischenschaltung eines Spartransformators an den Drehstromwechselrichter anschließbar sind (Anspruch 2). Auf diese Weise läßt sich die von der Bordbatterie gelieferte Spannung von 110 V in eine Drehstromspannung von 220 V für die in Frage kommenden Küchen-Nutzverbraucher umwandeln. Spartransformatoren weisen eine gemeinsame Wicklung für den Primär- und Sekundärkreis auf.
Dem Drehstromwechselrichter sind zweckmäßigerweise Filter (Drosseln) nachgeschaltet (Anspruch 3); diese dienen dazu, vom Drehstromwechselrichter erzeugte Oberwellen zu vermindern und damit den Küchen-Nutzverbrauchern eine der Sinusform weitergehend angepaßte Spannung zu liefern.

Die vom Thyristorsteller oder Chopper gelieferte Spannung läßt sich dadurch glätten, daß diesem in Richtung auf den Drehstromwechselrichter Filter nachgeschaltet sind (Anspruch 4). Vorzugsweise bestehen die Filter zumindest aus einer mit dem Thyristorsteller oder Chopper in Reihe geschalteten Drossel und einem parallel geschalteten Filterkondensator.

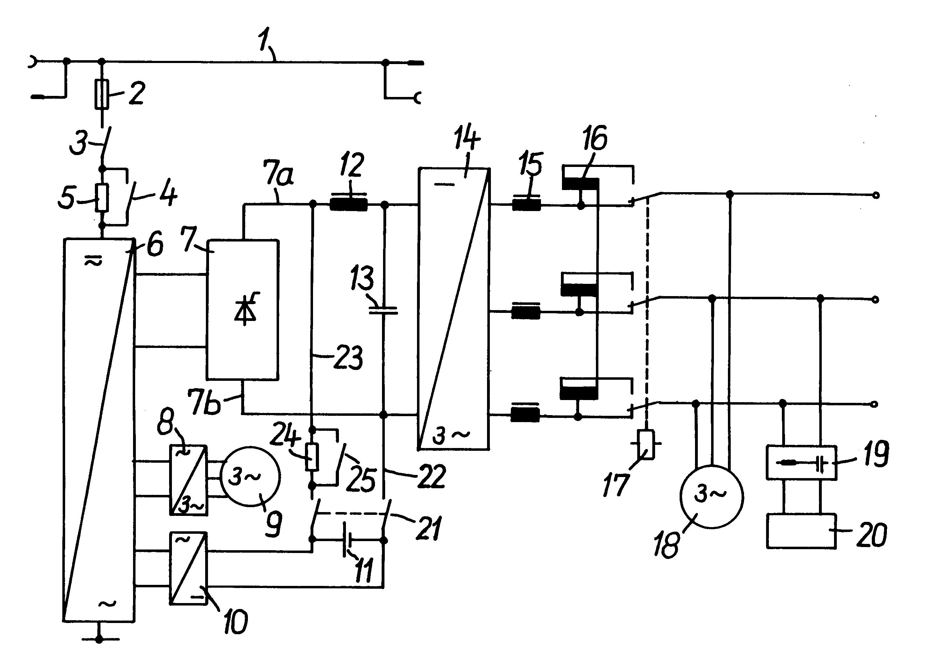

Die Erfindung wird nachfolgend anhand der Zeichnung erläutert, in der ein Schemabild eines Ausführungsbeispiels dargestellt ist.

Die in Rede stehende Energieversorgungseinrichtung für das Bordrestaurant eines Speisewagens wird von einer Zugsammelschiene 1 aus mit Energie versorgt. Die Energieeinspeisung erfolgt über eine Umformungseinheit 6 sowie eine Hochspannungssicherung 2, ein Einschaltschütz 3 und einen Anlaßwiderstand 5, der durch ein paralell geschaltetes Anlaßschütz 4 überbrückt werden kann. Die Umformungseinheit 6 steht ausgangsseitig mit einem Thyristorsteller 7, einem Drehstromwechselrichter 8 für ein Tiefkühl-Kälteaggregat 9 und einem Ladegerät 10 für eine Bordbatterie 11 in Verbindung.
Die Umformungseinheit 6 besteht aus einem Wechselrichter und einem Transformator, falls an der Zugsammelschiene 1 Wechselspannung anliegt. Bei der Versorgung mit Gleichspannung dagegen erfolgt die Einspeisung direkt über den Wechselrichter und den nachgeschalteten Transformator.

Dem Thyristorsteller ist unter Zwischenschaltung zweier Filter - nämlich einer in Reihe liegenden Drossel (Induktivität) 12 und einem parallel geschalteten Filterkondensator 13 - ein Drehstromwechselrichter 14 nachgeschaltet; diesem wird die vom Thyristorsteller 7 gelieferte Spannung unter Einwirkung der Filter 12 und 13 in geglättetem Zustand zugeführt.

Die vom Drehstromwechselrichter 14 erzeugte Drehstromspannung wird über Drosseln 15 einem Spartransformator 16 zugeführt, an den sich durch Betätigung eines Umschalters 17 die in Frage kommenden Küchen-Nutzverbraucher anschließen lassen. Bei diesen handelt es sich im dargestellten Ausführungsbeispiel um ein Kühlaggregat 18 für einen Kühlschrank und einen Mikrowellenherd 20 mit vorgeschaltetem Filter 19; dieses ermöglicht es, einen Spannungsverlauf mit angepaßt kleinem Klirrfaktor (in der Größenordnung 5 %) einzustellen.

Die Bordbatterie 11 ist über einen Schalter 21 und Leitungen 22, 23 an das Leitungsnetz 7a, 7b anschließbar, über welches der Thyristorsteller 7 im Normalbetrieb den Drehstromwechselrichter 14 mit Energie versorgt. Die Leitung 23 ist dabei - von der Bordbatterie 11 her gesehen - im Anschluß an den Schalter 21 mit einem Anlaßwiderstand 24 ausgestattet, der mittels eines dazu parallel geschalteten Anlaßschützes 25 überbrückbar ist.

Falls die Spannung auf der Zugsammelschiene 1 ausfällt, läßt sich die Bordbatterie 11 durch Betätigen des Schalters 21 über die Leitungen 22 und 23 in der Weise zuschalten, daß sie nunmehr über den Drehstromwechselrichter 14 die in Frage kommenden Küchen-Nutzverbraucher speist. Da die in die Küchen-Kühlaggregate installierte Leistung im Normalfall etwa ein Drittel der insgesamt in die Kücheneinrichtung installierten Leistung ausmacht, (beispielsweise 3 kVA im Vergleich zu insgesamt 9 kVA), ist die Energieversorgungseinrichtung vorzugsweise derart ausgestaltet, daß bei Ausfall der Spannung auf der Zugsammelschiene 1 lediglich das Kühlaggregat 18 an die Bordbatterie 11 angeschlossen ist. Dies läßt sich dadurch erreichen, daß den übrigen Küchen-Nutzverbrauchern - im Ausführungsbeispiel also dem Mikrowellenherd 20 nebst Filter 19 - ein Unterbrecher vorgeschaltet ist, der mit dem Zuschalten der Bordbatterie 11 durch Schließen des Schalters 21 betätigt wird.

Bei dem in Rede stehenden Ausführungsbeispiel beträgt die Ausgangsspannung des Drehstromwechselrichters 14 220 V. Die von der Bordbatterie als Notenergieversorgung gelieferte Spannung in Höhe von 110 V wird dementsprechend unter Einwirkung des Spartransformators 16 in Drehstrom mit einer Spannung von 220 V umgewandelt. Es versteht sich von selbst, daß die Energieversorgungseinrichtung zusätzlich mit einer nichtdargestellten Steuerung ausgestattet sein kann, die bei Ausfall bzw. bei Anliegen der Spannung an der Zugsammelschiene 1 selbsttätig den Schalter 21 schließt bzw. öffnet und damit die Bordbatterie 11 zu- bzw. abschaltet.

## Patentansprüche

1. Energieversorgungseinrichtung für das Bordrestaurant eines Speisewagens, mit einer an eine Zugsammelschiene (1) anschließbaren, eine Ein-Phasen-Wechselspannung liefernden Umformungseinheit (6), der über einen Thyristorsteller (7) oder Chopper und einen Drehstromwechselrichter (8) Küchen-Nutzverbraucher und über ein Ladegerät (10) eine Bordbatterie (11) nachgeschaltet sind, welche bei Ausfall der Sammelschienen-Spannung als Notenergieversorgung zumindest einen Teil der Küchen-Nutzverbraucher speist, dadurch gekennzeichnet, daß die Bordbatterie (11) in der Weise zuschaltbar ist, daß sie an den Drehstromwechselrichter (14) angeschlossen ist, der Thyristorsteller (7), der Drehstromwechselrichter (8) und das Ladegerät (10) jeweils als separate und einzeln an die Umformeinheit (6) angeschlossene Bauelemente ausgebildet sind, daß zwischen der Bordbatterie (11) und einem Gleichstromzwischenkreis des Thyristorstellers (7) und eines Drehstromwechselrichters (14) ein Schalter (21) angeordnet ist, der mit einer Abschaltfunktion gekoppelt ist, die bei einem geschlossenen Schalter (21) übrige Küchennutzverbraucher, insbesondere einen Mikrowellenherd (20), abschaltet und daß dem Drehstromwechselrichter (14) ein Spartransformator (16) nachgeschaltet ist, der über einen Umschalter (17) zwischen den Drehstromwechselrichter (14) und angeschlossenen Kühlaggregate (18) schaltbar bzw. in einer anderen Schaltstellung überbrückbar ist.

2. Einrichtung nach Anspruch 1, dadurch gekennzeichnet, daß dem Drehstromwechselrichter (14) Filter (15) nachgeschaltet sind.

3. Einrichtung nach nach Anspruch 1 oder 2, dadurch gekennzeichnet, daß dem Thyristorsteller (7) oder Chopper in Richtung auf den Drehstromwechselrichter (14) Filter (12,13) nachgeschaltet sind.

## Claims

1. Power supply device for the restaurant of a dining car, having a conversion unit (6) which is connectable to a train busbar (1) and supplies a single-phase a.c. current and downstream of which are connected, via a thyristor controller (7) or chopper and a three-phase power inverter (8), power-consuming kitchen appliances and, via a charging appliance (10), an on-board battery (11) which, in the event of failure of the busbar voltage, serves as an emergency power supply for at least some of the power-consuming kitchen appliances, characterized in that the on-board battery (11) is connectable to the system in that it is connected to the three-phase power inverter (14), the thyristor controller (7), the three-phase power inverter (8) and the charging appliance (10) each take the form of separate components which are individually connected to the conversion unit (6), that disposed between the on-board battery (11) and a d.c. link of the thyristor controller (7) and of a three-phase power inverter (14) is a switch (21) which is coupled to a tripping function which, when the switch (21) is closed, disconnects other power-consuming kitchen appliances, in particular a microwave oven (20), and that connected downstream of the three-phase power inverter (14) is an autotransformer (16) which may be switched by a changeover switch (17) between the three-phase power inverter (14) and connected cooling units (18) or be jumpered in another operating position.

2. Device according to claim 1, characterized in that filters (15) are connected downstream of the three-phase power inverter (14).

3. Device according to claim 1 or 2, characterized in that filters (12, 13) are connected downstream of the thyristor controller (7) or chopper in the direction of the three-phase power inverter (14).

## Revendications

1. Dispositif d'alimentation en énergie du restaurant de bord d'un wagon restaurant, ayant un convertisseur (6) fournissant une tension monophasée et pouvant être connecté au circuit de distribution électrique (1) du train, audit convertisseur (6) étant connectés via un commutateur à thyristors (7) ou chopper et un onduleur triphasé (8) des appareils électriques de cuisine et via un chargeur de batterie (10) une batterie de bord (11), ladite batterie alimentant en cas de défaillance de la tension du circuit de distribution électrique du train au moins une partie des appareils électriques de cuisine, caractérisé en ce que la batterie de bord (11) peut être raccordée de façon à être connectée à l'onduleur triphasé (14); le commutateur à thyristors (7), l'onduleur triphasé (8) et le chargeur de batterie (10) étant chacun conçus comme composants séparés et indépendants raccordés au convertisseur (6), et en ce qu'un interrupteur (21) est inséré entre la batterie de bord (11) et un circuit intermédiaire à courant continu du commutateur à thyristors (7) et un onduleur triphasé (14), ledit interrupteur (21) étant couplé avec une fonction de déconnexion qui, lorsque l'interrupteur (21) est fermé, déconnecte les autres appareils électriques de cuisine, et en particulier un four à micro-ondes (20) et en ce que l'onduleur triphasé (14) est suivi d'un autotransformateur (16) commutable à l'aide d'un commutateur (17) entre l'onduleur triphasé (14) et des groupes frigorifiques (18), ou pontable dans une autre position.

2. Un dispositif selon la revendication 1, caractérisé par le fait que le l'onduleur triphasé (14) est muni d'un filtre de sortie (15).

3. Un dispositif selon les revendications 1 et 2, caractérisé par le fait que la sortie du commutateur à thyristors (7) ou chopper est munie de filtres (12, 13) en amont de l'onduleur triphasé (14).
